# EUROPÄISCHE PATENTSCHRIFT

(11) **EP 1 345 444 B1**
(45) Veröffentlichungstag und Bekanntmachung des Hinweises auf die Patenterteilung: **01.03.2006**
(21) Anmeldenummer: 02405184.9
(22) Anmeldetag: 11.03.2002
(51) Int. Cl.: H04N 7/18, G08B 13/196, G08B 15/00, B66B 13/24

(54) **Video Überwachungssystem mittels 3-D Halbleiterbildsensor und Infra-Rot Lichtquelle**
Video survielance system with 3d CCD image sensor and infra red light source
Systeme de sureillance video en trois dimensions avec une source de rayonnements infrarouges

(43) Veröffentlichungstag der Anmeldung: 17.09.2003
(73) Patentinhaber: INVENTIO AG, CH-6052 Hergiswil (CH)
(72) Erfinder: Deplazes, Romeo, 6330 Cham (CH); Cortona, Elena, 8037 Zürich (CH)

(56) Entgegenhaltungen:
- EP-A- 0 448 803
- EP-A- 0 551 175
- EP-A- 1 059 621
- US-A- 5 001 557
- US-A- 5 973 730
- US-A- 6 050 369

## Beschreibung

Gegenstand der Erfindung sind eine Überwachungsvorrichtung einer Aufzugstüre, ein Verfahren zum Überwachen des Zustandes einer Aufzugtüre sowie ein Softwaremodul zur Türzustandsüberwachung nach den unabhängigen Ansprüchen.

Aufzugssysteme weisen mindestens eine Aufzugkabine auf, die in einem Aufzugschacht, oder frei entlang einer Transportvorrichtung bewegbar ist. Normalerweise ist die Aufzugkabine durch eine Kabinentüre und der Aufzugschacht in jeder Etage durch eine Schachttüre abgesichert.

Häufig werden zur Überwachung der Türen eines Aufzugs mechanische, magnetische, induktive oder ähnliche Schalter eingesetzt. Zusätzlich kommen optische Systeme, wie zum Beispiel,Lichtschranken oder Lichtgitter, zum Einsatz. Mit derartigen Ansätzen kann der Aufzugsteuerung gewisse Information - zum Beispiel über den Zustand der Türen - zugeführt werden. Der Informationsgehalt ist jedoch relativ begrenzt, da ein Schalter zum Beispiel nur zwei Zustände (digitale Information, ob Türe offen oder geschlossen ist) anzuzeigen in der Lage ist. Um ein komplexeres Überwachungssystem aufbauen zu können, braucht es zum Beispiel eine Kombination mehrerer Schalter und Lichtschranken.

Aus technischen Gründen funktionieren Lichtschranken oder Lichtgitter bei einem Türspalt, der kleiner als 5 cm ist, nicht mehr zuverlässig. Das ist ein Nachteil derartiger Lösungen. Auch beträgt die Reaktionszeit ca. 65 Millisekunden, was unter Umständen zu lang sein kann.

Insbesondere die optischen Systeme weisen gewisse Vorteile auf, da sie im Gegensatz zu mechanischen Lösungen berührungslos arbeiten und keinem mechanischen Verschleiss unterliegen. Leider ist auch bei komplexeren optischen Systemen, wie sie im Aufzugbereich zur Anwendung kommen, die Aussagekraft auf einige wenige Zustände beschränkt. Es kann zum Beispiel detektiert werden, ob sich Jemand im Türbereich aufhält, und es können Bewegungen erkannt werden.

Gewisse optische Fotosensoren ermöglichen sogar das Erfassen 3-dimensionaler Bilder, wobei mechanisch bewegte Teile zum Beispiel in Form von Spiegeln zum Einsatz kommen. Diese Sensoren sind aufwendig und teuer.

Aus der PCT-Patentanmeldung WO 01/42120 ist ein System zur Überwachung von Aufzugtüren bekannt, das mit einem vorprogrammierten Prozessor, einer digitalen Kamera, einer analogen Kamera oder einer Videokamera arbeitet. Es handelt sich hierbei um den nächstliegenden Stand der Technik. Die Kamera liefert eine Sequenz von 2-dimensionalen Bildern durch deren Vergleich Information über den Zustand der Türen verfügbar gemacht wird. Dieses System arbeitet mit Fremdlicht, das von der Kamera eingefangen und aufgenommen wird. Das führt zu Problem in Situationen, wo die Intensität dieses Fremdlichts sich stark verändert - zum Beispiel bei Einfall von Sonnenlicht - und damit die Bildhelligkeit stark zunimmt. Umgekehrt kann der Einsatz einer solchen Kamera zu besagtem Zweck auch problematisch sein, wenn das vorhandene Fremdlicht nicht ausreicht. Bei der Türzustandsüberwachung ist es essentiell, dass die Überwachung unter allen Umständen sicher und zuverlässig funktioniert. Eine Abhängigkeit von Fremdlicht ist aus dieser Sicht problematisch. Gemäss der PCT-Patentanmeldung kommt ein klassischer Mustererkennungsansatz (Patternmatching) zur Anwendung, um die Sequenz der 2-dimensionalen Bilder auswerten zu können. Ein System, das gemäss der genannten PCT-Patentanmeldung mit 2-dimensionalen Bildern arbeitet, kann keine Aussage über Distanzen treffen. Eine gewisse Aussage über Bewegungen und Bewegungsrichtungen ist bei einem solchen 2-dimensional arbeitenden System nur durch eine rechenintensive Nachbearbeitung der gelieferten Bilder möglich.

Es sind 3-D Halbleitersensoren bekannt, die das 3-dimensionale Erfassen von Bildinformation ermöglichen. Derartige Sensoren sind zum Beispiel aus dem Artikel "Fast Range Imaging by CMOS Sensor Array Through Multiple Double Short Time Integration (MDSI)", P. Mengel et al., Siemens AG, Corporate Technology Department, Munich, Germany bekannt. Ein weiteres Beispiel ist in dem Artikel "A CMOS Photosensor Array for 3D Imaging Using Pulsed Laser", R. Jeremias et al., 2001 IEEE International Solid-State Circuits Conference, Seite 252, beschrieben.

Es ist eine Aufgabe der Erfindung, eine umfassende, genaue und zuverlässige Kontrolle der Türen, insbesondere des Zustandes der Türen eines Aufzuges zu ermöglichen.

Es ist eine weitere Aufgabe der Erfindung, einen zuverlässigen und schnell arbeitenden Einklemmschutz für Aufzugtüren zu realisieren.

Diese Aufgaben werden in vorteilhafter Weise erfindungsgemäss durch eine Vorrichtung, ein Verfahren und ein Softwaremodul nach den unabhängigen Ansprüchen gelöst.

Vorteilhafte Weiterbildungen der Erfindung sind durch die abhängigen Ansprüche definiert.

Die Erfindung wird nachfolgend beispielsweise an Hand von Zeichnungen näher erläutert. Es zeigen:
- Fig. 1A, 1B: schematische Draufsichten der Türen eines Aufzugs mit einem erfindungsgemässen Sensor;
- Fig. 2: schematisches Blockdiagramm eines erfindungsgemäs-
- Fig. 3A, 3B: sen Sensors mit Verarbeitungseinrichtung, schematische Draufsichten der Türen eines Aufzugs mit einem erfindungsgemässen Sensor;
- Fig. 4A: schematische Draufsicht des Teiles eines Aufzugs mit einem erfindungsgemässen Sensor;
- Fig. 4B: schematische Ansicht eines Aufzugs mit einem erfindungsgemässen Sensor;
- Fig. 5: schematische Draufsicht der Türen eines Aufzugs mit einem erfindungsgemässen Sensor;
- Fig. 6: schematisches Flussdiagramm, gemäss Erfindung;
- Fig. 7: schematisches Blockdiagramm eines erfindungsgemässen Softwaremoduls.

Gemäss Erfindung wird erstmals ein neuartiger optischer 3-D Sensor im Aufzugbereich eingesetzt. Dabei handelt es sich vorzugsweise um einen 3-D Sensor, der im Infrarotbereich arbeitet. Besonders geeignet ist ein 3-D Sensor, der einen optischen Sender zum impulsartigen Aussenden von Licht und eine CMOS Sensorgruppe zum Empfangen von Licht umfasst. Idealerweise handelt es sich bei dem optischen Sender um eine Leuchtdiode oder Laserdiode, die zum Beispiel Licht im infraroten Bereich aussendet, wobei das Licht in kurzen Impulsen - quasi blitzartig - emittiert wird. Die Impulse können mehrere 10 Nanosekunden lang sein. Vorzugsweise ist die Diode zu diesem Zweck mit einem (elektrischen) Shutter versehen, der das emittierte Licht unterbricht. Die Diode kann aber auch direkt gepulst werden. Die Sensorgruppe dient als Bildsensor, der Licht in elektrische Signale umwandelt. Vorzugsweise besteht die Sensorgruppe aus einer Anzahl von lichtempfindlichen Elementen. Die Sensorgruppe ist mit einem Verarbeitungschip (z.B. ein CMOS Sensorchip) verbunden, der die Laufzeit des emittierten Lichtes bestimmt, indem ein spezielles Integrationsverfahren (multiple double short time integration, MDSI genannt) ausgeführt wird. Dabei misst der Verarbeitungschip in wenigen Millisekunden simultan die Distanz zu einer grossen Anzahl von Zielpunkten im Raum. Typischerweise kann dabei, je nach Anzahl der lichtempfindlichen Elemente, eine räumliche Auflösung von 5 mm erzielt werden.

Ein weiterer 3D-Sensor, der neben anderen 3D-Sensoren auch für den Einsatz im Zusammenhang mit der vorliegenden Erfindung geeignet ist, basiert auf einem Distanzmessprinzip, bei dem die Laufzeit von ausgesendetem Licht über die Phase des Lichts erfasst wird. Dabei wird die Phasenlage beim Senden des Lichtes und beim Empfangen verglichen und daraus die verstrichene Zeit bzw. der Abstand zum reflektierenden Objekt ermittelt. Dazu wird vorzugsweise statt kurzen Lichtimpulsen ein moduliertes Lichtsignal emittiert.

Um Fremdlichteinflüsse zu unterdrücken, kann man eine Doppelabtastung vornehmen, bei der einmal mit und einmal ohne Licht abgetastet wird. Man erhält dabei zwei elektrische Signale (einmal mit aktiver Beleuchtung, einmal ohne), die man durch Subtraktion in ein endgültiges Signal überführen kann, das im Wesentlichen vom Fremdlicht unabhängig ist. Ein solcher Sensor kann sogar bei Sonneneinstrahlung und bei sich ändernden Lichteinflüssen zuverlässig eingesetzt werden.

Vorzugsweise wird der 3-D Sensor aus Halbleiterkomponenten realisiert, was zu einer grossen Zuverlässigkeit und Robustheit führt. Auch ist ein solcher 3-D Sensor besonders klein und kann durch Massenproduktion günstig herstellbar gemacht werden.

Durch die Erfassung von drei Dimensionen kann eine Vorrichtung realisiert werden, die direkt die Positionen von Objekten, die Distanzen zwischen diesen und sogar deren Bewegungen und Bewegungsrichtungen erfasst. Zu diesem Zweck kann eine Verarbeitungseinrichtung eingesetzt werden (zum Beispiel ein PC oder eine CPU mit peripheren Komponenten), die räumliche mathematische Operationen ausführt. Diese Art von räumlichen mathematischen Operationen unterscheidet sich wesentlich von den bisher verwendeten speziellen Mustererkennungsansätzen, die zum Beispiel mit verschiedenen Graustufen arbeiten.

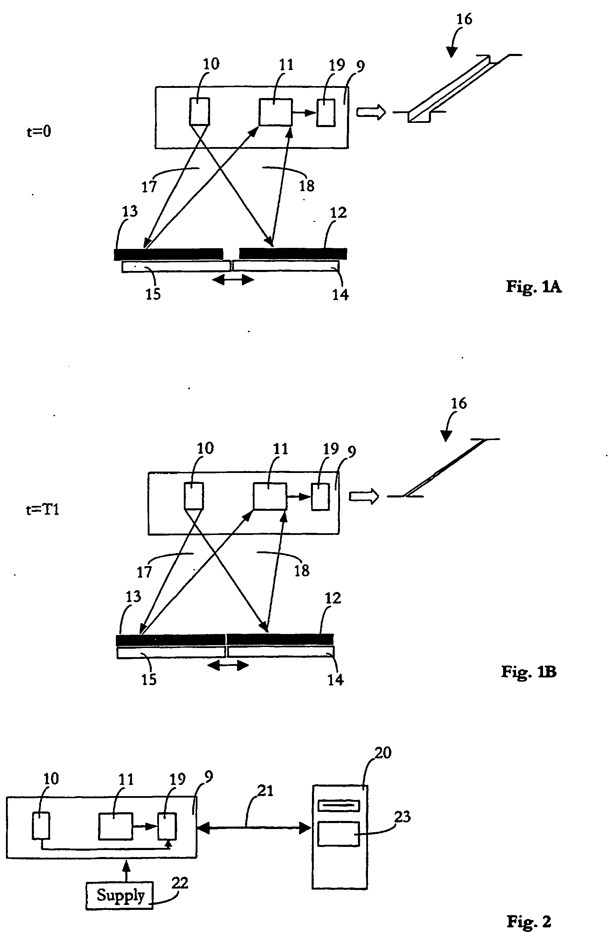

Eine erste Ausführungsform einer erfindungsgemässen Vorrichtung ist in Figur 1A gezeigt. Es handelt sich um eine Vorrichtung zum gleichzeitigen Überwachen der Kabinentüren 12, 13 und Schachttüren 14, 15 eines Aufzugs (der Aufzug selbst ist nicht in Figur 1A gezeigt). Die Vorrichtung umfasst einen 3-D Halbleitersensor 9, der derart im Bereich der zu überwachenden Türen 12-15 montiert ist, dass sich die Türen 12-15 zumindest teilweise im Erfassungsbereich 17, 18 des Sensors 9 befinden. Der Sensor umfasst eine Laserdiode 10, die als Lichtquelle dient und einen Eigenlichtanteil aussendet. Je nach optischer Strahlformung ergibt sich ein beleuchteter Bereich, zum Beispiel in Form eines Lichtkegels 17. Es ist eine Sensorgruppe 11 vorgesehen, die als Bildsensor dient und über den Lichtkegel 18 Lichtinformation empfängt und in elektrische Signale umwandelt. Die Lichtinformation wird durch einen Verarbeitungschip 19 aufbereitet und in Bildinformation 16 (z.B. in Form eines 3-D Abstandsbildes) umgesetzt. Ein Beispiel eines solchen 3-D Abstandsbildes 16 ist in Figur 1A stark vereinfacht dargestellt. Man kann dem Abstandsbild 16 entnehmen, dass im Türbereich ein Spalt besteht, wobei die Schachttüren 14, 15 geschlossen und die Kabinentüren 12, 13 noch leicht geöffnet sind.

Wiederholt man den Erfassungsvorgang nach einem kurzen Zeitintervall, so ergibt sich das in Figur 1B gezeigte Abstandsbild 16. Der Türspalt zwischen den beiden Kabinentüren 12 und 13 hat sich nahezu geschlossen. Das Abstandsbild 16 zeigt daher nur noch einen sehr schmalen Spalt. Die Wiederholung des Erfassungsvorgangs koinzidiert vorzugsweise mit dem Kurzzeitintegrations-Zeitfenster des 3-D Sensors. Die Grösse T1 des Zeitfensters kann mit der Wiederholfrequenz der Lichtpulse übereinstimmen, die durch die Lichtquelle 10 ausgesendet werden.

Der Zeitpunkt, zu dem ein Laserpuls in Richtung der Türen 12 - 15 ausgesendet wird, wird vorzugsweise mit Bezug auf den Anfang eines Integrationsfensters synchronisiert. Ein von der Sensorgruppe 11 nach Reflektion an den Türen 12 - 15 empfangener Laserpuls löst nach einer Laufzeit TO ein linear ansteigendes Sensorsignal X(t) aus, das zum Beispiel zu den zwei unterschiedlichen Integrationszeitpunkten T2 und T3 gemessen werden kann (wobei T0 < T2 < T3). In Abhängigkeit der Distanz von der Lichtquelle 10 zu den Türen 12 - 15 und von dort zur Sensorgruppe 11, wird nur ein Bruchteil der ursprünglichen Intensität der Lichtpulse detektiert während das Integrationszeitfenster T2 bis T3 aktiv ist. Indem man zwei Integrationsmessungen zu unterschiedlichen Zeiten T2 und T3 macht, kann die Position und Steigung des vom Zeitpunkt T0 an zunehmenden Intensitätssignals X(t) ermittelt werden. Zum Beispiel aus der Position und Steigung kann die Laufzeit T0 genau bestimmt werden und damit auch die Distanz zu den Türen 12 - 15. Eine derartige Auswertung der Lichtinformation durch den Verarbeitungschip 19 ermöglicht es, Information zu erhalten, die auf andere Art und Weise momentan nicht erhältlich ist.

Ein Teil dieser Verarbeitung findet im Verarbeitungschip 19 statt und nicht erst in einer separaten Verarbeitungseinrichtung. Dass heisst, ein Teil der Verarbeitung wird durch entsprechende Hardware ausgeführt, was zuverlässig und schnell ist.

Es sind zwei unterschiedliche Verarbeitungsansätze anwendbar. Bei dem ersten erfindungsgemässen Ansatz umfasst die Sensorgruppe *n* lichtempfindliche Elemente (*n* > 0). Jedes dieser lichtempfindlichen Elemente liefert ein Intensitätssignal xₙ(t), dessen Stärke abhängig ist von der Intensität des vom jeweiligen lichtempfindlichen Element empfangenen Lichts. Diese Intensitätssignale xₙ(t) können - zum Beispiel durch eine Art Überlagerung - zu einem Interisitätssignale X(t) zusammengefasst werden. Nach diesem Zusammenfassen kann dann die oben beschriebene Auswertung erfolgen, bei der aus der Position und Steigung des Intensitätssignals X(t) der Zeitpunkt T0 ermittelt wird. Bei dieser Ausführungsform wird die Flächenauflösung der Anordnung reduziert, da mehrere lichtempfindliche Elemente gemeinsam ausgewertet werden. Es ist trotzdem möglich, die Laufzeit und damit die Distanz zu den Türen zu ermitteln. Man erhält also eine drei-dimensional arbeitende Sensorvorrichtung, deren Tiefenauflösung besser ist als die Flächenauflösung.

Bei dem zweiten erfindungsgemässen Ansatz umfasst die Sensorgruppe wiederum *n* lichtempfindliche Elemente (n > 0). Jedes dieser lichtempfindlichen Elemente liefert ein Intensitätssignal xₙ(t), dessen Stärke abhängig ist von der Intensität des vom jeweiligen lichtempfindlichen Element empfangenen Lichts. Diese Intensitätssignale xₙ(t) können dann die oben beschriebene Auswertung durchlaufen, wobei jedes der Intensitätssignale xₙ(t) einzeln (vorzugsweise zeitgleich) verarbeitet wird. Aus der Position und Steigung jedes der Intensitätssignale xₙ(t) ist der jeweilige Zeitpunkt Tₙ0 ermittelbar. Vorzugsweise weist der Verarbeitungschip mehrere parallele Kanäle (vorzugsweise n Kanäle) zur Verarbeitung der n Intensitätssignale xₙ(t) auf. Bei dieser Ausführungsform ergibt sich eine Flächenauflösung, da mehrere Punkte im Raum (zum Beispiel mehrere Punkte der Türen) unabhängig voneinander erfasst werden können. Für jeden dieser Punkte im Raum ist es möglich, die Laufzeit Tₙ0 und damit die Distanz zu ermitteln. Man erhält also eine drei-dimensional arbeitende Sensorvorrichtung, mit Tiefenauflösung und Flächenauflösung.

Wie in Figur 2 gezeigt, weist die erfindungsgemässe Vorrichtung zusätzlich eine Verarbeitungseinrichtung 20 auf, die zum Beispiel über eine Kommunikationsverbindung 21 mit dem Sensor 9 in Verbindung steht. Die Kommunikationsverbindung 21 dient zur Übertragung von Bildinformation (auch Zustandsinformation genannt) von dem Sensor 9 an die Verarbeitungseinrichtung 20. Zusätzlich weist die Vorrichtung ein Versorgungsmittel 22 (zum Beispiel eine Spannungsquelle) zum Versorgen des Sensors 9 auf. Die Verarbeitungseinrichtung 20 ist durch Installation eines Softwaremoduls derart ausgelegt, dass die Bildinformation auswertbar ist, um die Überwachung der Aufzugtüren 12 - 15 zu ermöglichen.

In einer möglichen Ausführungsform wird die Bildinformation von der Verarbeitungseinrichtung 20 weiter ausgewertet, um Information über den Türzustand zu erhalten. Hierzu kann zum Beispiel die aus der Bildinformation gewonnene Zustandsinformation mit Soll-Information verglichen werden. Zu diesem Zweck kann die Verarbeitungseinrichtung 20 Mittel 23 zum Bereitstellen der Soll-Information umfassen. Dabei kann es sich zum Beispiel um einen internen Festplattenspeicher handeln. Es ist zum Beispiel möglich, dass das in Figur 1B gezeigte Abstandsbild 16 als Soll-Information in dem Festplattenspeicher gespeichert ist. Mit einem Vergleichsalgorithmus kann die Verarbeitungseinrichtung 20 ermitteln, ob die Zustandsinformation mit der Soll-Information übereinstimmt. In diesem Fall kann davon ausgegangen werden, dass die Türen 12 - 15 geschlossen sind. Es kann auch andere Soll-Information vorgegeben sein, mit der die Verarbeitungseinrichtung 20 jeweils Vergleiche durchführt. Jeder Soll-Information kann zum Beispiel eine bestimmte Reaktion zugeordnet sein.

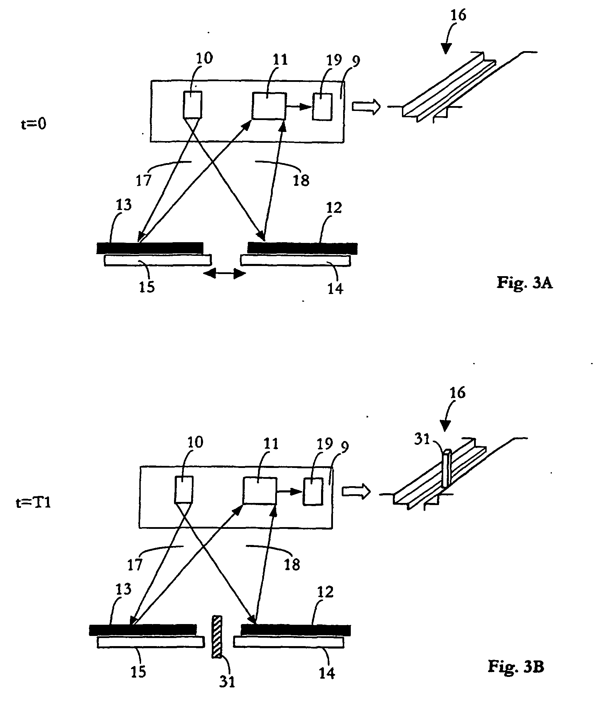

Bei einer anderen Ausführungsform wird die Bildinformation von einem Verarbeitungschip 19 hardwareseitig vorverarbeitet und dann von der Verarbeitungseinrichtung 20 ausgewertet, ohne die Zustandsinformation mit Soll-Information zu vergleichen. Hierbei wird Bildinformation miteinander verglichen, die von dem Sensor 9 zu mindestens zwei zeitlich kurz aufeinanderfolgenden Zeitpunkten erfasst wurde. Ein solcher Vergleich kann zum Beispiel durch geeignete rechnerische Überlagerung der Bildinformation erfolgen. Subtrahiert man die Bildinformation zum Zeitpunkt t=0 von der Bildinformation zum Zeitpunkt t=T1, so kann die Verarbeitungseinrichtung 20 Veränderungen im 3-dimensionalen Raum erkennen. Details zu dieser Ausführungsform sind den Figuren 3A und 3B zu entnehmen. In Figur 3A ist eine Situation gezeigt, bei der zum Zeitpunkt t=0 sowohl die Kabinentüren 12, 13 als auch die Schachttüren 14, 15 ein Stück weit geöffnet sind. Zum Zeitpunkt t=T1 (siehe Figur 3B) befindet sich ein Objekt 31 im Türspalt. Das in Figur 3B gezeigte Abstandsbild 16 zeigt stark schematisiert, dass das Objekt 31 erfasst wurde. Durch eine Überlagerung der beiden Abstandsbilder 16, kann das Objekt 31 eindeutig detektiert werden, da man durch die Überlagerung zum Beispiel ein 3-dimensionales Höhenprofil erhält, dass im Wesentlichen der Form des Objektes entspricht. Das Eindringen des Objektes 31 führt zu einer erkennbaren Änderung des Höhenprofils. Sobald ein Objekt im Bereich der Türen 12 - 15 detektiert wurde, kann die Verarbeitungseinrichtung 20 eine entsprechende Reaktion auslösen. Die Reaktion kann zum Beispiel darin bestehen, dass das Schliessen der Türen 12 - 15 unterbrochen wird, um zu verhindern, dass das Objekt 31 von den Türen eingeklemmt wird. Alternativ kann die Schliessbewegung gestoppt und die Türen können wieder geöffnet werden.

Diese Ausführungsform kann erweitert werden, indem die Verarbeitungseinrichtung 20 softwareseitig so auslegt wird, dass nicht nur erkannt werden kann, ob sich ein Objekt im Türbereich befindet, sondern dass durch Vergleichsoperationen auch das Objekt klassifiziert werden kann.

Die in Figuren 3A und 3B gezeigte Ausführungsform kann erweitert werden, indem der Verarbeitungseinrichtung 20 eine Sequenz mehrerer zeitlich aufeinanderfolgender Bilder zugeführt wird. In diesem Fall kann die Verarbeitungseinrichtung 20 durch geeignete Verarbeitung der Bildinformation zusätzlich zur reinen Detektierung des Objektes 31 auch die Bewegungsrichtung und/oder Geschwindigkeit des Objektes 31 ermitteln. Diese Bewegungsinformation kann verwendet werden, um situationsangepasste Reaktionen auszulösen. Ermittelt die Verarbeitungseinrichtung 20, dass sich das Objekt langsam bewegt, so kann das Schliessen der Türen 12 - 15 unterbrochen oder die Schliessbewegung gestoppt werden. Handelt es sich um ein Objekt 31, das sich schnell bewegt, kann es zum Beispiel ausreichen die Schliessbewegung der Türen zu verlangsamen oder diese nur für einen kurzen Moment zu unterbrechen. Als weitere Reaktion ist es denkbar eine Durchsage auszulösen, um sicher zu stellen, dass sich niemand im Türbereich aufhält.

Wie in den Figuren 1A, 1B und 3A, 3B gezeigt, kann die erfindungsgemässe Vorrichtung zum gleichzeitigen Überwachen der Kabinentüren und Schachttüren eingesetzt werden.

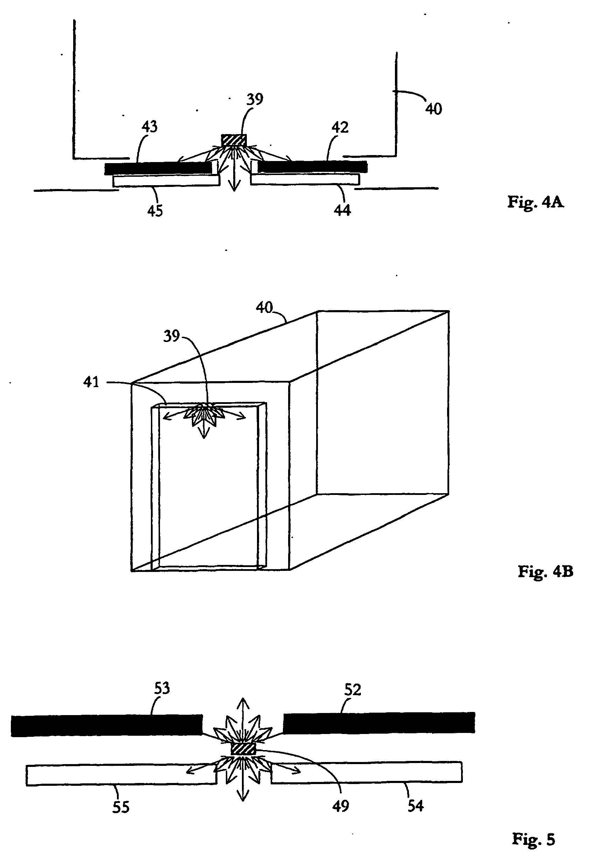

Will man in erster Line die Kabinentüren 42, 43 überwachen, so kann der Sensor 39 im Bereich des Kabinentürkämpfers 41 montiert werden, wie schematisch in der Figur 4A (Draufsicht) und Figur 4B zu erkennen. Der Kabinentürkämpfer 41 befindet sich im oberen Bereich der Aufzugkabine 40. Es ist in Figur 4A zu erkennen, dass bei dieser Art der Konfiguration hauptsächlich die Kabinentüren 42, 43 überwachbar sind. Da jedoch die Schachttüren 44, 45 versetzt der Bewegung der Kabinentüren 42, 43 folgen, kann auch eine gewisse Aussage über das Schliessen bzw. Öffnen der Schachttüren 44, 45 getroffen werden. Bei der in den Figuren 4A, 4B gezeigten Konfiguration bewegt sich der Sensor 39 solidarisch mit der Aufzugkabine 40 von Etage zu Etage. Die Schachttüren der einzelnen Etagen können bei Abwesenheit der Kabine 40 nicht durch den Sensor 39 überwacht werden. Es empfiehlt sich, auf jeder Etage schachttürseitige Überwachungsmittel - zum Beispiel konventionelle zwangsöffnende Kontakte - einzusetzen.

Zur gleichzeitigen Überwachung der Kabinentüren 52, 53 und der Schachttüren 54, 55 kann der Sensor 49 zwischen den Kabinen- und Schachttüren 52 - 55 im Bereich des Kämpfers angeordnet werden, wie in Figur 5 angedeutet. Dabei sollte die Lichtquelle des Sensors 49 so ausgerichtet sein, dass sie Licht in Richtung der Kabinentüren 52, 53 und der Schachttüren 54, 55 aussendet. Die Sensorgruppe des Sensors 49 sollte in Bezug auf die Lichtquelle so ausgerichtet sein, dass sie Licht einfängt, das von den Kabinentüren 52, 53 und von den Schachttüren 54, 55 reflektiert wurde.

Generell ist bei der Montage des Sensors zu beachten, dass der Sensor selbst durch externe Einflüsse (Objekte und/oder Personen, Witterung, mechanische Beschädigung, etc.) möglichst unbeeinflussbar sein sollte. Bei Zentertüren, wie in den Figuren 1A, 1B, 3A, 3B, 4 und 5 gezeigt, wird der Sensor vorzugsweise mittig zur Türe angeordnet. Bei einseitig schliessenden Teleskoptüren, oder bei Türen die von Oben nach Unten - zum Beispiel bei Lastaufzügen - oder in einer anderen Art und Weise schliessen, kann der Sensor auch anders angeordnet werden.

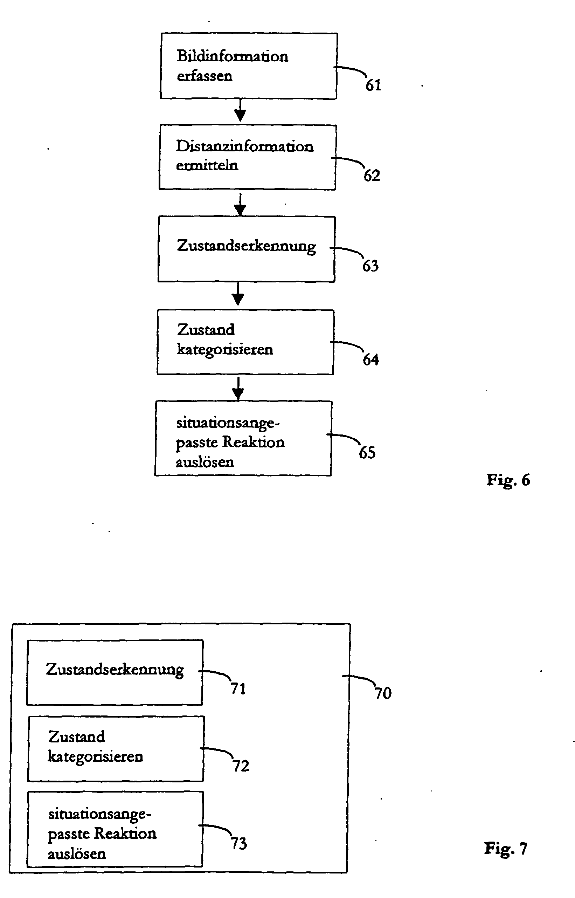

Ein erfindungsgemässes Verfahren zum überwachen des Zustandes einer Aufzugtüre umfasst mehrere Verfahrensschritte. Es wird durch einen Sensor (zum Beispiel Sensor 9 in Figur 1A) Licht erfasst, das an verschiedenen Raumpunkten im Umfeld der zu überwachenden Türe reflektiert wurde. Dieses Licht stammt von einer Lichtquelle (zum Beispiel Lichtquelle 10 in Figur 1A). Aus dem erfassten Licht wird Distanzinformation ermittelt (Box 62 in Figur 6). Dabei wird die Laufzeit des Lichtes berücksichtigt. Um dies zu ermöglichen, findet eine Synchronisation zwischen der Lichtquelle und der Sensorgruppe statt. Dieser Schritt wird vorzugsweise in einem speziellen Verarbeitungschip (zum Beispiel Sensorchip 19 in Figur 1A) ausgeführt. Dann erfolgt die Auswertung der Distanzinformation (Box 63) zum Erkennen eines Türzustands. Vorzugsweise wird dieser Schritt in einer Verarbeitungseinrichtung ausgeführt, wobei ein entsprechendes Softwaremodul zu Einsatz kommt. Vorzugsweise kommen räumliche mathematische Operationen bei der Auswertung der Distanzinformation zur Anwendung. Die Verarbeitungseinrichtung kategorisiert den Zustand in einen oder mehrere bekannte Zustände(Box 64). Das erfindungsgemässe Verfahren kann so ausgelegt werden, dass mindestens einer der folgenden Zustände erkennbar ist:
- Türspalt,
- Position der Aufzugtüre(n),
- Schliessverhalten der Aufzugtüre(n),
- Objekt im Bereich der Aufzugtüre(n).

In Abhängigkeit von dem erkannten Zustand wird dann durch die Verarbeitungseinrichtung eine situationsangepasste Reaktion ausgelöst (Box 65).

Es kann sich dabei um eine oder mehrere der folgenden Reaktionen handeln:
- Türschliessvorgang stoppen,
- Türöffnungsvorgang stoppen,
- Türschliessvorgang verlangsamen,
- Türöffnungsvorgang verlangsamen,
- Lautsprecherdurchsage auslösen,
- Serviceruf absetzen,
- Notruf auslösen,
- Aufzugbetrieb stoppen,
- Aufzugbetrieb mit reduzierter Geschwindigkeit fortsetzen,
- Evakuierung der Aufzugkabine einleiten,
- usw.

Ein erfindungsgemässes Softwaremodul 70 zum Einsatz in einer Verarbeitungseinrichtung eines Aufzugs ist in Figur 7 gezeigt. Das Softwaremodul 70 führt die folgenden Schritte aus, wenn es von der Verarbeitungseinrichtung aufgerufen und ausgeführt wird:
- Auswerten von Distanzinformation (Submodul 71), die von einem 3-D Sensor im Bereich einer Aufzugtüre bereitgestellt wird, um den Zustand der Aufzugtüre zu erfassen,
- Kategorisieren (Submodul 72) des Zustandes,
- Auslösen (Submodul 73)einer situationsangepassten Reaktion.

Das Softwaremodul 70 kann weitere Module umfassen.

Vorzugsweise werden die Lichtquelle und die Sensorgruppe in einem Gehäuse angeordnet. Dadurch erleichtert sich die Montage im oder am Aufzug, da die Lichtquelle nicht manuell in Bezug auf die Sensorgruppe ausgerichtet werden muss. Die Ausrichtung der beiden Komponenten kann bereits bei der Herstellung oder Vormontage erfolgen.

Zum Realisieren einer Schachttürüberwachung empfiehlt es sich, auf jeder Etage einen Sensor im Bereich der Schachttüre vorzusehen. Ein solcher Ansatz ist kostenmässig relativ aufwendig, da pro Etage ein Sensor zum Einsatz kommt.

Günstiger ist eine Realisierungsform, bei der ein Sensor zum Einsatz kommt, der sich solidarisch mit der Aufzugkabine von Etage zu Etage bewegt.

In einer weiteren Ausführungsform vergleicht die Verarbeitungseinrichtung 20 die Bildinformation mit einem oder mehreren Referenzbildern, um Information über den Türzustand zu erhalten. Hierzu kann zum Beispiel ein Referenzbild von der Bildinformation subtrahiert werden.
Gemäss einer verbesserten Ausführungsform erfolgt die Türzustandsüberwachung kontinuierlich durch eine Aufeinanderfolge zahlreicher Lichtpulse und deren Verarbeitung. Damit kann die Sicherheit im Aufzugbereich im Vergleich zu konventionellen, mechanischen Ansätzen erhöht werden.

Die erfindungsgemässe Türüberwachung eignet sich, um den Türzustand (Türposition, Türspalt, Verlauf der Schliessbewegung, etc.) zu erfassen.

Kommt eine konventionelle Kommunikationsverbindung zur Verbindung des Sensors mit der Verarbeitungseinrichtung zum Einsatz, so sollten wegen der Sicherheitsrelevanz der von dem Sensor an die Verarbeitungseinrichtung zu transferierenden Daten (Bildinformation) geeignete Massnahmen getroffen werden, um die Sicherheit beim Übertragen der Daten über die an sich nicht sichere Kommunikationsverbindung zu gewährleisten.

Die Vorrichtung gemäss Erfindung kann über eine Kommunikationsverbindung und/oder über ein Netzwerk mit einem Rechner verbunden sein, der die vom Sensor gelieferte Bildinformation weiter verarbeitet, aufbereitet und gegebenenfalls abspeichert. Damit lässt sich ein Überwachungssystem realisieren, dass zum Beispiel eine Aufzuganlage mit mehreren Aufzugschächten zentral überwacht.

Vorzugsweise wird eine erfindungsgemässe Vorrichtung in den Sicherheitskreis eines Aufzugs integriert. Dadurch wird der Sicherheitskreis leistungsfähiger und der Aufzug zuverlässiger. Als Konsequenz lässt sich unter Umständen damit die Verfügbarkeit des Aufzugs verbessern. Bei geeigneter Auslegung der erfindungsgemässen Vorrichtung können Betriebsstörungen reduziert werden, wodurch das Einschliessen von Personen in der Aufzugkabine seltener wird. Derartige Betriebsstörungen können in konventionellen Aufzügen durch mangelhaft funktionierende Verriegelungsmechanismen, durch Kontaktprobleme an Türverriegelungs-Kontrollschaltern, oder durch Verschmutzungen verursacht werden.

Eine vorteilhafte Weiterbildung der Erfindung ermöglicht es, die Türzustandsüberwachung so zu erweitern, dass ein Einklemmschutz realisiert werden kann.

Der Einklemmschutz gemäss Erfindung erlaubt es, eine Person frühzeitig zu detektieren und eine geeignete Reaktion auszulösen, um zum Beispiel die Einklemmgefahr im Türbereich zu reduzieren.

Es ist ein Vorteil der Erfindung, dass weder die Türzustandsüberwachung noch der Einklemmschutz Sensoren und andere Mittel in oder an den Türen braucht. Damit entfällt auch die Notwendigkeit Kabelzuführungen im Türbereich vorzusehen.

Ein weiterer Vorteil einer erfindungsgemässen Lösung mittels 3-D Sensor ist darin zu sehen, dass derartige Sensoren eine relativ kurze Zykluszeit (< 20ms) aufweisen. Damit können sehr schnelle Überwachungslösungen realisiert werden. Kritische Zustände können schneller erfasst und Reaktionen rechtzeitig ausgelöst werden. Die Erfindung ermöglicht, Überwachungssysteme zu realisieren, die eine Reaktionszeit zum Erkennen eines Objektes von einigen wenigen Millisekunden aufweisen. Das schnelle Erkennen ermöglicht es, sehr schnell eine geeignete Reaktion auszulösen und zwar, im Gegensatz zu bekannten Systemen, bevor es überhaupt zu einer Berührung zwischen den Türen und dem detektierten Objekt kommt.

Die verwendeten 3-D Sensoren ermöglichen eine Auswertung der dritten Dimension, was im Vergleich zu 1-dimensionalen Systemen (z.B. Lichtschranken) oder 2-dimensionalen Systemen (z.B. Lichtgitter oder CCD Kameras) vorteilhaft ist. Durch die Erfassung von drei Dimensionen kann die Türzustandsüberwachung bzw. der Einklemmschutz in direkter Art und Weise ein realitätsnahes Abbild des Istzustandes im Türbereich bekommen.

Es ist ein Vorteil des verwendeten Halbleitersensors, dass dieser mit einem Eigenlichtanteil arbeitet. Damit ist das System im Wesentlich unabhängig von den Umgebungsbedingungen und funktioniert sogar im Dunkeln. Als ein weiterer Vorteil kann geltend gemacht werden, dass die Erfindung ohne einen Kalibriermechanismus realisiert werden kann, der üblicherweise bei Kamera-basierten Systemen zum Einsatz kommt, um geänderten Umgebungsbedingungen Rechnung zu tragen. Mit einem Kalibriermechanismus wird bei einem Kamera-basierten System zum Beispiel die Lichtempfindlichkeit justiert. Dieser Aufwand entfällt.

Eine weitere Ausführungsform der Erfindung zeichnet sich dadurch aus, dass die Verarbeitungseinrichtung so ausgelegt ist, dass Bildinformation abspeicherbar ist. Damit ist es möglich einen kritischen Vorgang, zum Beispiel das Einklemmen einer Person beim Betreten oder Verlassen der Aufzugkabine, mittels Bildinformation zu dokumentieren. Derartige Bildinformation kann zum Beispiel zur Beweissicherung dienen.

In einer weiteren Ausführungsform der Erfindung wird als Reaktion ein Serviceruf ausgelöst, sobald ein detektierter Türspalt ein Mindestmass überschreitet, wobei bei einem unterkritischen Türspalt der Betrieb des Aufzugs nicht unterbrochen wird. Erst beim Überschreiten eines kritischen Wertes wird der Aufzug gestoppt. Zusätzlich kann eventuell ein Notruf abgesetzt werden.

Vorteilhafterweise kann man die Auswertung der Bildinformation, die durch den 3-D Sensor geliefert wird, mit dem Türantrieb verknüpfen, um eine Synchronisierung der Informationsverarbeitung zu ermöglichen. Zu diesem Zweck kann der Türantrieb mit einem Encoder ausgerüstet werden. Die Information, die vom Türantrieb über den Encoder an die Verarbeitungseinrichtung geliefert wird, kann beim Vergleichen der Istinformation mit der Sollinformation Verwendung finden.

Bei einem Aufzug mit breiten Türen können mehrere Sensoren eingesetzt werden, die entweder mit einer Verarbeitungseinrichtung oder mit mehreren Verarbeitungseinrichtungen verbunden sind.

Die Türüberwachung gemäss Erfindung kann entweder die konventionelle Überwachung der Türverriegelung ersetzen, oder komplementär zu einer Türverriegelungsüberwachung eingesetzt werden. Damit kann die Sicherheit des Gesamtsystems verbessert werden.

Die Erfindung zur Türüberwachung kann auch mit der Steuerung eines Aufzugs kombiniert werden, welche die Türstellung steuert. Damit kann ein Regelkreis aufgebaut werden, der je nach Türzustand eine entsprechend angepasste Reaktion auslöst.

Der erfinderische Gedanke kann erweitert werden, indem man den Sensor nicht nur zur Überwachung von Aufzugtüren, sondern zusätzlich zur Raumüberwachung einsetzt. Dabei kann bei entsprechender Anordnung des Sensors zum Beispiel der Innenraum der Kabine oder der Vorraum vor der Kabine überwacht werden.

## Patentansprüche

1. Überwachungsvorrichtung einer Aufzugtüre (12, 13, 14, 15), welche einen 3-D Halbleitersensor (9, 10, 11, 19) und eine Verarbeitungseinrichtung (20; 23) umfasst, wobei
- der 3-D Halbleitersensor (9, 10, 11, 19) eine Lichtquelle (10) aufweist, die im Bereich der Aufzugtüre (12, 13, 14, 15) montiert ist und die die Aufzugtüre (12, 13, 14, 15) mit Lichtimpulsen zumindest teilweise beleuchtet,
- der 3-D Halbleitersensor (9, 10, 11, 19) eine Sensorgruppe (11) aufweist, die im Bereich der Aufzugtüre (12, 13, 14, 15) montiert ist und von der Aufzugtüre (12, 13, 14, 15) reflektierte Lichtinformation empfängt,
- der 3-D Halbleitersensor (9, 10, 11, 19) einen Verarbeitungschip (19) umfasst, der die Lichtinformation in 3-D Bildinformation (16) wandelt,
- der 3-D Halbleitersensor (9, 10, 11, 19) diese 3-D Bildinformation (16) über eine Kommunikationsverbindung (21) an die Verarbeitungseinrichtung (20, 23) übermittelt,
- die Verarbeitungseinrichtung (20, 23) entweder mehrere zeitlich aufeinander folgende, übermittelte 3-D Bildinformationen (16) vergleicht und Veränderungen zwischen diesen 3-D Bildinformationen (16) erkennt, oder
- die Verarbeitungseinrichtung (20, 23) eine übermittelte 3-D Bildinformation (16) mit einem Referenzbild oder mehreren gespeicherten Referenzbildern vergleicht und Veränderungen zwischen der 3-D Bildinformation (16) und dem/n Referenzbild/ern erkennt,
- die Verarbeitungseinrichtung (20, 23) bei erkannter Veränderung eine Überwachungsreaktion auslöst.

2. Vorrichtung nach Anspruch 1, **dadurch gekennzeichnet, dass** der Verarbeitungschip (19) des 3-D Halbleitersensors (9, 10, 11, 19) eine Einrichtung aufweist, die die Distanz zu jedem von der Sensorgruppe (11) erfassten Zielpunkt ermittelt.

3. Vorrichtung nach Anspruch 1 oder 2, **dadurch gekennzeichnet, dass** die Verarbeitungseinrichtung (20, 23) einen Prozessor mit einem Softwaremodul umfasst, der aus der Bildinformation zeitlich aufeinanderfolgender, vom 3-D Halbleitersensor (9, 10, 11, 19) erfassten Bilder die Bewegungsrichtung und/oder die Geschwindigkeit der abgebildeten Objekte ermittelt.

4. Vorrichtung nach Anspruch 1 oder 2, **dadurch gekennzeichnet, dass** im Falle einer Abweichung zwischen der aktuellen 3-D Bildinformation (16) und gespeicherten Referenzbildern eine Reaktion auslösbar ist, wobei die Art der Reaktion vorzugsweise von der Art der Abweichung abhängig ist.

5. Vorrichtung nach Anspruch 4, **dadurch gekennzeichnet, dass** die Reaktion erst ausgelöst wird, wenn die Abweichung einen Schwellwert übersteigt oder einem Erkennungsmuster gleicht.

6. Vorrichtung nach einem der vorhergehenden Ansprüche, **dadurch gekennzeichnet, dass** der Sensor (9) für die Montage im Bereich des Kämpfers einer Aufzugtüre ausgelegt ist, vorzugsweise für die Montage im Bereich des Kabinentürkämpfers.

7. Vorrichtung nach einem der Ansprüche 1, 2 oder 3, **dadurch gekennzeichnet, dass** durch die Verarbeitungseinrichtung zum Auswerten ein Auswerteverfahren ausführbar ist, das vorzugsweise auf räumlich mathematischen Operationen beruht.

8. Vorrichtung nach Anspruch 8, **dadurch gekennzeichnet, dass** das Auswerteverfahren auf einem Integrationsverfahren beruht.

9. Vorrichtung nach einem der vorhergehenden Ansprüche, **dadurch gekennzeichnet, dass** die Lichtquelle Licht im Infrarotbereich abstrahlt, wobei es sich bei der Lichtquelle vorzugsweise um eine Leuchtdiode oder Laserdiode handelt.

10. Vorrichtung nach einem der vorhergehenden Ansprüche, **dadurch gekennzeichnet, dass** die Sensorgruppe ein Bildsensor ist, der mit einem CMOS Verarbeitungschip verbunden ist.

11. Vorrichtung nach einem der vorhergehenden Ansprüche, **dadurch gekennzeichnet, dass** zum Reduzieren von Fremdlichteinflüssen eine Doppelabtastung vorgenommen wird, bei der die zu überwachende Aufzugtüre (12, 13, 14, 15) einmal mit und einmal ohne Licht abgetastet wird.

12. Überwachungsverfahren einer Aufzugtüre, mit einem 3-D Halbleitersensor (9, 10, 11, 19), der von der Aufzugstüre reflektiertes Licht erfasst, **gekennzeichnet durch** folgende, in Software modulen durchgefuhrte Schritte:
- Ermittlung von dreidimensionaler Bildinformation unter Berücksichtigung der Laufzeit und/oder der Phasenlage des Lichts,
- Auswertung der dreidimensionalen Bildinformation (63) zum Erkennen eines Zustands (64) der Aufzugstüre (12, 13, 14, 15),
- Kategorisierung des Zustands (64) der Aufzugstüre-(12, 13, 14, 15),
- Auslösung einer situationsangepassten Reaktion (65).

13. Verfahren nach Anspruch 13, wobei das Auswerten der dreidimensionalen Bildinformation auf räumlich mathematischen Operationen beruht.

14. Verfahren nach Anspruch 13 oder 14, wobei mindestens einer der folgenden Zustände erkennbar ist:
- Türspaltweite
- Position der Aufzugtüre
- Schliessverhalten der Aufzugtüre
- Objekt im Bereich der Aufzugtüre.

15. Softwaremodul (70) zum Durchführen der Verfahren nach einem der Ansprüche 12 - 14.

## Revendications

1. Dispositif de surveillance d'une porte d'ascenseur (12, 13, 14, 15), qui comprend un capteur à semi-conducteur 3D (9, 10, 11, 19) et un dispositif de traitement (20 ; 23), étant précisé
- que le capteur à semi-conducteur 3D (9, 10, 11, 19) comporte une source lumineuse (10) qui est montée dans la zone de la porte d'ascenseur (12, 13, 14, 15) et qui éclaire au moins en partie celle-ci à l'aide d'impulsions lumineuses,
- que le capteur à semi-conducteur 3D (9, 10, 11, 19) comporte un groupe de capteurs (11) qui est monté dans la zone de la porte d'ascenseur (12, 13, 14, 15) et qui reçoit des informations lumineuses réfléchies par ladite porte (12, 13, 14, 15),
- que le capteur à semi-conducteur 3D (9, 10, 11, 19) comprend une puce de traitement (19) qui convertit les informations lumineuses en informations d'image 3D (16),
- que le capteur à semi-conducteur 3D (9, 10, 11, 19) transmet ces informations d'image 3D (16) par l'intermédiaire d'une liaison de communication (21) au dispositif de traitement (20, 23),
- que le dispositif de traitement (20, 23) soit compare plusieurs informations d'image 3D (16) successives transmises et détecte des variations entre ces informations d'image 3D (16),
- soit compare des informations d'image 3D (16) transmises avec une image de référence ou plusieurs images de référence mises en mémoire, et détecte les variations entre les informations d'image 3D (16) et la ou les images de référence,
- et que le dispositif de traitement (20, 23), en cas de détection de variation, déclenche une réaction de surveillance.

2. Dispositif selon la revendication 1, **caractérisé en ce que** la puce de traitement (19) du capteur à semi-conducteur 3D (9, 10, 11, 19) comporte un dispositif qui détermine la distance par rapport à chaque point cible détecté par le groupe de capteurs (11).

3. Dispositif selon la revendication 1 ou 2, **caractérisé en ce que** le dispositif de traitement (20, 23) comprend un processeur avec un module de logiciel qui, à partir des informations d'image successives détectées par le capteur à semi-conducteur 3D (9, 10, 11, 19), détermine le sens de déplacement et/ou la vitesse des objets représentés.

4. Dispositif selon la revendication 1 ou 2, **caractérisé en ce que** dans le cas d'un écart entre les informations d'image 3D (16) actuelles et les images de référence mises en mémoire, une réaction peut être déclenchée, le type de cette réaction dépendant de préférence du type de l'écart.

5. Dispositif selon la revendication 4, **caractérisé en ce que** la réaction n'est déclenchée qu'une fois que l'écart dépasse une valeur seuil ou est égal à un modèle de détection.

6. Dispositif selon l'une des revendications précédentes, **caractérisé en ce que** le capteur (9) est conçu pour être monté dans la zone de la traverse d'imposte d'une porte d'ascenseur, de préférence d'une porte de cabine.

7. Dispositif selon l'une des revendications 1, 2 ou 3, **caractérisé en ce que** grâce au dispositif de traitement pour l'évaluation, on peut appliquer un procédé d'évaluation qui est basé de préférence sur des opérations mathématiques spatiales.

8. Dispositif selon la revendication 8, **caractérisé en ce que** le procédé d'évaluation est basé sur un procédé d'intégration.

9. Dispositif selon l'une des revendications précédentes, **caractérisé en ce que** la source lumineuse émet de la lumière dans la zone infrarouge, étant précisé qu'il s'agit de préférence d'une diode lumineuse ou d'une diode laser.

10. Dispositif selon l'une des revendications précédentes, **caractérisé en ce que** le groupe de capteurs est constitué par un capteur d'image qui est relié à une puce de traitement CMOS.

11. Dispositif selon l'une des revendications précédentes, **caractérisé en ce que** pour réduire les influences d'une lumière extérieure, on procède à une double exploration, lors de laquelle la porte d'ascenseur à surveiller (12, 13, 14, 15) est explorée une fois avec de la lumière et une fois sans lumière.

12. Procédé de surveillance d'une porte d'ascenseur, avec un capteur à semi-conducteur 3D (9, 10, 11, 19) qui détecte la lumière réfléchie par la porte d'ascenseur, **caractérisé par** les étapes suivantes, exécutées dans des modules de logiciels :
- détermination d'informations d'image tridimensionnelles, en tenant compte du temps de propagation et/ou de la relation de phase de la lumière,
- évaluation des informations d'image tridimensionnelles (63) pour identifier un état (64) de la porte d'ascenseur (12, 13, 14, 15),
- classement de l'état (64) de la porte d'ascenseur (12, 13, 14, 15),
- déclenchement d'une réaction adaptée à la situation (65).

13. Procédé selon la revendication 13, l'évaluation des informations d'image tridimensionnelles étant basée sur des opérations mathématiques spatiales.

14. Procédé selon la revendication 13 ou 14, l'un au moins des états suivants étant identifiable :
- largeur de l'interstice de la porte
- position de la porte d'ascenseur
- comportement de fermeture de la porte d'ascenseur
- objet dans la zone de la porte d'ascenseur.

15. Module de logiciel (70) pour mettre en oeuvre les procédés selon l'une des revendications 12 à 14.

## Claims

1. Monitoring device of a lift door (12, 13, 14, 15), which comprises a three-dimensional semiconductor sensor (9, 10, 11, 19) and a processing device (20; 23), wherein
- the three-dimensional semiconductor sensor (9, 10, 11, 19) comprises a light source (10) which is mounted in the region of the lift door (12, 13, 14, 15) and which at least partly illuminates the lift door (12, 13, 14, 15) by light pulses,
- the three-dimensional semiconductor sensor (9, 10, 11, 19) comprises a sensor group (11) which is mounted in the region of the lift door (12, 13, 14, 15) and receives light information reflected by the lift door (12, 13, 14, 15),
- the three-dimensional semiconductor sensor (9, 10, 11, 19) comprises a processing chip (19) which converts the light information into three-dimensional image information,
- the three-dimensional semiconductor sensor (9, 10, 11, 19) transmits this three-dimensional image information (16) to the processing device (20, 23) by way of a communications connection (21),
- either the processing unit (20, 23) compares several items of three-dimensional information (16) transmitted successively in time and recognises changes between these items of three-dimensional image information (16) or
- the processing unit (20, 23) compares a transmitted item of three-dimensional image information (16) with a reference image or several stored reference images and recognises changes between the item of three-dimensional image information (16) and the reference image or images and
- the processing device (20, 23) triggers a monitoring reaction in the case of a recognised change.

2. Device according to claim 1, **characterised in that** the processing chip (19) of the three-dimensional semiconductor sensor (9, 10, 11, 19) comprises a device which ascertains the distance to each target point detected by the sensor group (11).

3. Device according to claim 1 or 2, **characterised in that** the processing device (20, 23) comprises a processor with a software module which ascertains from the image information of images, which are successive in time and detected by the three-dimensional semiconductor sensor (9, 10, 11, 19), the movement direction and/or the speed of the imaged objects.

4. Device according to claim 1 or 2, **characterised in that** in the case of deviation between the instantaneous three-dimensional image information (16) and stored reference images a reaction can be triggered, wherein the kind of reaction is preferably dependent on the kind of deviation.

5. Device according to claim 4, **characterised in that** the reaction is triggered only when the deviation exceeds a threshold value or equates to a recognition pattern.

6. Device according to one of the preceding claims, **characterised in that** the sensor (9) is designed for mounting in the region of the cross member of a lift door, preferably for mounting in the region of the cage door cross member.

7. Device according to one of claims 1, 2 and 3, **characterised in that** an evaluating method preferably based on three-dimensional mathematical operations can be performed by the processing equipment for the evaluation.

8. Device according to claim 7, **characterised in that** the evaluating method is based on an integration procedure.

9. Device according to one of the preceding claims, **characterised in that** the light source radiates light in the infrared range, wherein the light source is preferably a luminescent diode or laser diode.

10. Device according to one of the preceding claims, **characterised in that** the sensor group is an image sensor with which a complementary metal oxide semiconductor processing chip is connected.

11. Device according to one of the preceding claims, **characterised in that** a double scanning, in which the lift door (12, 13, 14, 15) to be monitored is scanned once with and once without light, is carried out for reducing the influences of outside light.

12. Monitoring method of a lift door, with a three-dimensional semiconductor sensor (9, 10, 11, 12) which detects light reflected by the lift door, **characterised by** the following steps performed in software modules:
- ascertaining of three-dimensional image information with consideration of the transit time and/or phase position of the light,
- evaluation of the three-dimensional image information (63) for recognition of a state (64) of the lift door (12, 13, 14, 15),
- categorisation of the state (64) of the lift door (12, 13, 14, 15) and
- triggering of a situation-adapted reaction (65).

13. Method according to claim 12, wherein the evaluation of the three-dimensional image information is based on three-dimensional mathematical operations.

14. Method according to claim 12 or 13, wherein at least one of the following states is recognisable:
- door gap width
- position of the lift door
- closing behaviour of the lift door
- object in the region of the lift door.

15. Software module (70) for performing the method according to one of claims 12 to 14.
